# EUROPEAN PATENT APPLICATION

(11) **EP 4 480 736 A1**
(43) Date of publication of application: **25.12.2024**
(21) Application number: 23180465.9
(22) Date of filing: 20.06.2023
(51) Int. Cl.: B60L 50/60

(54) **METHOD FOR CHARGING AN ELECTRICAL ENERGY STORAGE SYSTEM**

(71) Applicant: Volvo Car Corporation, 405 31 Göteborg (SE)
(72) Inventor: ARVANI, Maedeh, 40531 Göteborg (SE); MART, Ugur, 40531 Göteborg (SE)
(74) Representative: Maiwald GmbH

(57) **Abstract**

The disclosure relates to a method (100) for charging an electrical energy storage system (10), the electrical energy storage system (10) comprising a first electrical energy storage unit (12) and a second electrical energy storage unit (14). The disclosure further relates to an electrical energy storage system (10), a vehicle (1), comprising the electrical energy storage system (10), and a computer program product associated with the method (100).

## Description

### TECHNICAL FIELD

The present disclosure relates to a method for charging an electrical energy storage system, an electrical energy storage system, a vehicle, and a computer program product.

### BACKGROUND ART

Fast charging of electrical energy storage system has a big impact on degradation of their battery cells. Specifically, the highest rate of capacity fade and degradation of the battery cells happens during fast charging at high State of Charge (SOC) levels of the battery cells.

However, fast charging is a much-needed method for different electrical energy storage systems, such as the ones used in vehicles, specifically battery-electric vehicle. Fast charging enables battery-electric vehicles to travel long distances in one journey and despite limited range.

### SUMMARY

There is a need for a charging method, which is fast but with less degradation on the batteries to extend their lifetime.

The problem is at least partially solved or alleviated by the subject matter of the independent claims of the present disclosure, wherein further examples are incorporated in the dependent claims.

According to a first aspect, there is provided a method for charging an electrical energy storage system, the electrical energy storage system comprising a first electrical energy storage unit and a second electrical energy storage unit, the method comprising:
charging the first electrical energy storage unit and the second electrical energy storage unit with electrical energy; and
transferring electrical energy from the second electrical energy storage unit to the first SE:AFE
electrical energy storage unit, thereby discharging the second electrical energy storage unit.

According to the method, the first electrical energy storage unit is charged twice. Specifically, by transferring electrical energy from the second electrical energy storage unit to the first electrical energy storage unit, the first electrical energy storage unit is further charged. The two charging processes of the first electrical energy storage unit may be distinguished by the usage of the wording "charging" and the usage of the wording "further charging" herein. Charging may specifically refer to a fast charging of first electrical energy storage unit or, in particular, the entire electrical energy storage system by fast charging the first electrical energy storage unit and the second electrical energy storage unit, as will be explained further below. However, further charging of the first electrical energy storage unit specifically refers to the transfer of electrical energy to the first electrical energy storage unit from the second electrical energy storing unit. This further charging may specifically be carried out based on a stored electrical energy, which is stored in the second electrical energy storage unit during the charging process.

The method for charging the electrical energy storage system may be separated into two steps or stages. In the first step or stage, the charging of both electrical energy storage units may be carried out. In the second step or stage, the transferring of the electrical energy stored in the second electrical energy storage unit during the first step or stage to the fist electrical energy storage unit may be carried out. In such a two-step or two-stage method, different types of electrical energy storage units having different charging and degradation characteristics may be utilized as will be explained in more detail below.

The two electrical energy storage units may be of different types, which will be described below in more detail. Specifically, the first electrical energy storage unit may be configured and/or designed such that it may be favorable to charge it only to a certain state of charge to limit its degradation as much as possible. The second electrical energy storage, on the other hand, may be configured and/or designed such that its charging has little influence on its degradation.

In an example, the first electrical energy storage unit may comprise at least one battery cell and the second electrical energy storage unit may comprise at least one capacitor. Such different types of electrical energy storage units are advantageous with respect to the charging and transferring steps as described herein. Specifically, battery cells may hold charges and be discharged for usage well, e.g., in a vehicle, however, may be susceptible to degradation when fast charging. On the other hand, capacitors may be relatively worse in holding charges and discharging for usage but may be less susceptible to degradation when fast charging and may be charged very fast. Combining these both types in different electrical energy storage units allows for the advantageous electrical energy storage system and method as described herein.

In an example, the at least one capacitor may be a lithium ion capacitor, for example. The at least one battery cell may be a lithium ion battery cell, for example. The specific advantage of a lithium ion capacitor is that they are stable while fast charging, and they have neglectable degradation compared to battery cells. In addition, the specific power of lithium ion capacitors may be about ten times higher than the one of lithium ion batteries, so the lithium ion capacitors may be charged significantly faster.

The lithium ion capacitor has been found to be a particularly advantageous capacitor in the electrical energy storage system. In particular, the lithium ion capacitor has several advantages over other capacitor types, such as, but not limited to, supercapacitors. Supercapacitors have a low specific energy and thus, to make use of these in the electrical energy storage system as described herein, the electrical energy storage system would become very heavy. Thus, supercapacitors and many other forms of capacitors in an electrical energy storage system as described herein may not be practical in several applications, such as but not limited to, in vehicles. However, the lithium ion capacitor as proposed herein has a high specific energy and may be therefore provided with relatively little weight in the electrical energy storage system, which is highly advantageous for several applications such as but not limited to vehicles.

The at least one lithium ion capacitor may comprise an anode, a cathode, an electrolyte and a separator. The anode of the lithium ion capacitor may be the negative electrode and based on a lithium ion battery element. The cathode of the lithium ion capacitor may be the positive electrode and carbon-based. The lithium ion capacitor may operate based on electrochemical reaction and charged using the reversible intercalation of lithium ions.

Lithium ion capacitors as proposed herein therefore show a high specific power with a high specific energy capacity, which is much higher than other capacitors, e.g., supercapacitors. Lithium ion capacitors as proposed herein do not have an inflection point where a fast capacity fade behavior is observed like it is the case in lithium ion batteries, for example. The capacity fade of lithium ion capacitors as proposed herein may be less than 1% after 3 years of a cycling test.

In an electrical energy storage system, the proposed second electrical energy storage unit, having the lithium ion capacitors, may be protective at fast charging of the entire electrical energy storage system by having a big impact on avoiding formation of lithium plating in the battery cells of the first electrical energy storage unit. The second electrical energy storage unit does not need to be too large for this purpose.

It may be sufficient that the second electrical energy storage unit is configured with less than 40 %, in particular less than 30 % or less than 20 %,, moreover in particular in the range of 5 % to 40 %, in the range of 7 % to 30 % or in the range of 10 % to 20 % of the overall or entire energy capacity or battery capacity of the electrical energy storage system. The rest of the capacity of the electrical energy storage system may be provided by the first electrical energy storage unit.

By fast charging both electrical energy storages, both electrical energy storages may be charged to a certain SOC. The first electrical energy storage may be charged up to a certain or predetermined SOC, for which the first electrical energy storage is not or less negatively impacted by the fast charging process in terms of its maximum lifetime than if it would be charged beyond that certain or predetermined SOC. However, this comes at the cost that the first electrical energy storage unit may not be charged to a desired, higher SOC but only to a lower SOC relating to limited degradation. For this purpose, the method further includes the transfer of electrical energy from the second electrical energy storage unit to the first electrical energy storage unit, herein also referred to as a further charging. This transferring of electrical energy may be slower than the charging of both electrical energy storage units. Accordingly, the first electrical energy storage unit may still reach the desired SOC but without detrimental effect to its maximum lifetime caused by the fast charging process at high SOCs.

The electrical energy storage system may be of a vehicle, such as a battery-electric vehicle, for example. However, the application of the method is not limited to electrical energy storage systems in vehicles.

In an example, the charging of the first electrical energy storage unit and the second electrical energy storage unit with electrical energy may be carried out at least partially or entirely in parallel. This means that both electrical energy storage units may be simultaneously charged, in particular, fast charged. The same source, in particular charging station, for electrical energy may be used for charging both electrical energy storage units.

In an example, the transferring of the electrical energy from the second electrical energy storage unit to the first electrical energy storage unit may be carried out after the first electrical energy storage has been charged to a predetermined state of charge. The predetermined state of charge has the advantage that charging, specifically fast charging, may be discontinued or stopped before the first electrical energy storage unit is charged at an SOC above the predetermined SOC, at which the first electrical energy storage unit may significantly degrade. Accordingly, when the predetermined state of charge of the first electrical energy storage is reached, the charging of at least the first electrical energy storage unit may be stopped. Alternatively, when the predetermined state of charge of the first electrical energy storage is reached, the charging, in particular in the form of fast charging, of at least the first electrical energy storage unit may be stopped but charging may be continued at a speed slower than the previous charging, which was in particular carried out as fast charging. Thereby, the electrical energy storage system may be charged to a state of charge higher than the predetermined state of charge but without significant degradation of the first electrical energy storage unit because fast charging is not performed at an SOC higher than the predetermined SOC.

In an example, he predetermined state of charge of the first electrical energy storage may be at least 40 %, at least 50 % or at least 60%. In particular, the predetermined state of charge of the first electrical energy storage may be at least one of 40 %, 45 %, 50 %, 55 %, 60 %, 65 % and/or 70 %. The suggested SOCs have been found advantageous with respect to a required SOC for many use cases of the electrical energy storage system, e.g., in a vehicle, and in terms of degradation. The predetermined state of charge may be selectable or fixed, for example. By selecting the predetermined SOC, the user may have control over the charging method in a way such that he can influence the SOC after charging according to his needs.

In an example, the first electrical energy storage unit may be discharged while electrical energy from the second electrical energy storage unit may be transferred to the first electrical energy storage unit. Accordingly, the electrical energy storage system may already be used while the transferring of the electrical energy from the second electrical energy storage unit to the first electrical energy storage unit is taking place. This has the advantage that the user of the electrical energy storage system, e.g., a driver of a vehicle having the electrical energy storage system, may already use the electrical energy storage system, e.g., drive the vehicle by utilizing the electrical energy in the first electrical energy storage, despite that the method for charging the electrical energy storage system may still be carried out. For example, in case of a vehicle, when the vehicle is fast charged at a charging station, e.g., at a highway rest stop, both electrical energy storage units may be charged but the first electrical energy storage unit may only be charged to the predetermined SOC. Then, the driver may discontinue charging via the charging station and continue driving. However, the first electrical energy storage unit may then still be further charged via the electrical energy transferred from the second electrical energy storage unit, effectively giving the driver a greater range for driving with the vehicle.

In an example, the electrical energy may be transferred from the second electrical energy storage unit to the first electrical energy storage unit slower than, in particular previously, electrical energy is supplied to the first electrical energy storage unit and the second electrical energy storage unit while charging. Accordingly, while the electrical energy storage units may be fast charged, the transfer of the electrical energy from the second electrical energy storage unit to the first electrical energy storage unit may not be a fast charging process, but a slower charging process. Specifically, the electrical energy may be transferred from the second electrical energy storage unit gradually to the first electrical energy storage unit. This is because the electrical energy storage system may be already used with the SOC of the first electrical energy storage unit gained by fast charging and there may be no rush for charging the first electrical energy storage unit with the electrical energy from the second electrical energy storage unit. For example, if the first electrical energy storage unit of the electrical energy storage system of the above example of a vehicle has been charged to 60 % SOC, the vehicle can typically drive for such a long duration that the first electrical energy storage unit may not need the charge from the second electrical energy storage unit for a long time and the first electrical energy storage unit may be gradually charged with the electrical energy from the second electrical energy storage unit.

In an example, after transferring the electrical energy from the second electrical energy storage unit to the first electrical energy storage unit, a state of charge of the first electrical energy storage unit may be at least 60 % or at least 80 %. The SOC after transfer of the electrical energy may depend on whether the first electrical energy storage is discharged in between, i.e., used for the purpose of driving a vehicle, for example.

In an example, the second electrical energy storage unit may be charged to a predetermined state of charge of at least 80 % or at least 90 %. In particular, the second electrical energy storage unit may be charged to a predetermined state of charge of substantially 100 %. Specifically, the second electrical energy storage unit may be chargeable very quickly, as will be explained further below. Accordingly, the second electrical energy storage unit may be charged to a very high SOC or entirely.

In an example, the electrical energy may be transferred from the second electrical energy storage unit to the first electrical energy storage unit until the second electrical energy storage unit is substantially entirely discharged. Accordingly, the second electrical energy storage unit may only be used for the charging of the first electrical energy storage unit but not for any further functions. The second electrical energy storage unit may thus be provided with limited functionalities and therefore in a very cost-effective manner.

In an example, the charging may carried out as fast charging of the first electrical energy storage unit and the second electrical energy storage unit. The first electrical energy storage unit may be charged at a fast charging rate in the range of 1C to 5C, in particular in the range of 1C to 3C. The second electrical energy storage unit may be charged at a fast charging rate of at least 3C, in particular of at least 5C or at least 10C. For example the fast charging rate of the second electrical energy storage unit may be in the range of 3C to 20C, in particular 5C to 15C, for example. The different C-rates for the fast charging of different electrical energy storage units may correlate to different types of electrical energy storage units, where the first electrical energy storage unit may be more susceptible to degradation when fast charging, while the second electrical energy storage unit may be less susceptible to degradation when fast charging.

According to a second aspect, there is provided an electrical energy storage system, comprising a first electrical energy storage unit and a second electrical energy storage unit. The electrical energy storage system may be configured for being charged using the method of this disclosure.

The electrical energy storage system may further comprise a charging control unit for controlling the charging process of the electrical energy storage system as described herein. The electrical energy storage system may be configured for being charged using the method of this disclosure by means of a corresponding configuration of the charging control unit.

The two electrical energy storage units may be electrically connected or connectable in parallel to the charging control unit and/or an external charging station, such that both may be charged in parallel. Further, the two electrical energy storage units may be electrically connected with each other in series such that the second electrical energy storage unit may charge the first electrical energy storage unit.

In an example, the first electrical energy storage unit may comprise at least one battery cell and the second electrical energy storage unit may comprise at least one capacitor. Such different types of electrical energy storage units are advantageous with respect to the charging and transferring steps as described herein. Specifically, battery cells may hold charges and be discharged for usage well, e.g., in a vehicle, however, may be susceptible to degradation when fast charging. On the other hand, capacitors may be relatively worse in holding charges and discharging for usage but may be less susceptible to degradation when fast charging and may be charged very fast. Combining these both types in different electrical energy storage units allows for the advantageous electrical energy storage system and method as described herein.

In an example, the at least one capacitor may be a lithium ion capacitor, for example and as described above. The at least one battery cell may be a lithium ion battery cell, for example. The specific advantage of a lithium ion capacitor is that they are stable while fast charging, and they have neglectable degradation compared to battery cells. In addition, the specific power of lithium ion capacitors may be about ten times higher than the one of lithium ion batteries, so the lithium ion capacitors may be charged significantly faster.

According to a third aspect, there is provided a vehicle, comprising the electrical energy storage system of this disclosure.

According to a fourth aspect, there is provided a computer program product comprising instructions to cause the electrical energy storage system or vehicle of this disclosure to carry out the method of this disclosure.

The computer program product may be a computer program as such or a product, such as a computer-readable storage medium, having the instructions stored thereon.

It should be noted that the above examples may be combined with each other irrespective of the aspect involved. Accordingly, the method may be combined with structural features and, likewise, the electrical energy storage system and the vehicle may be combined with features described above with regard to the method, for example.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a schematic representation of a vehicle and an electrical energy storage system according to this disclosure;
- Figure 2: shows a schematic representation of a method according to this disclosure;
- Figure 3: shows a schematic representation of a state of a charge of the electrical energy storage system after a first step of the method of Fig. 2; and
- Figure 4: shows a schematic representation of a state of a charge of the electrical energy storage system after a second step of the method of Fig. 2.

### DETAILED DESCRIPTION

The Figures are merely schematic representations and serve only to illustrate examples of the disclosure. Identical or equivalent elements are in principle provided with the same reference signs.

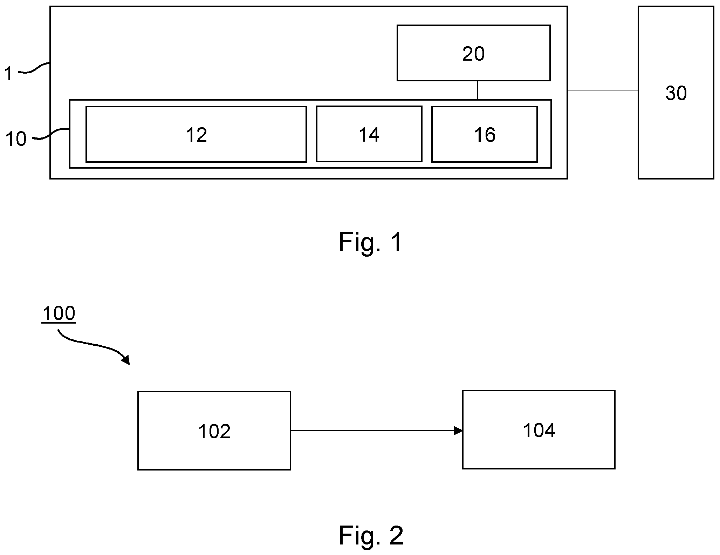

Figure 1 shows a schematic representation of a vehicle 1. The vehicle 1 may be a battery-electric vehicle or any other vehicle making use of an electrical energy storage system 10, for example.

The vehicle 1 of this example includes an electrical energy storage system 10 having a first electrical energy storage unit 12, a second electrical energy storage unit 14 and a charging control unit 16. The first electrical energy storage unit 12 may, for example, comprise lithium ion battery cells, whereas the second electrical energy storage unit 14 may, for example, comprise lithium ion capacitors.

The vehicle 10 further comprises a load 20 connected to the electrical energy storage system 10, which discharges the electrical energy storage system 10, specifically the first electrical energy storage unit 12. The load 20 may be an electric motor, for example. Further or other loads of the vehicle 10 may be connected the electrical energy storage system 10 as well.

The vehicle 1 or electrical energy storage system 10 of this example is electrically connected to a charging station 30, which is configured for charging the electrical energy storage system 10. The charging station 30 may be configured fast charging the electrical energy storage system 10.

The first electrical energy storage unit 12 and the second electrical energy storage unit 14 are configured, in particular by means of the charging control unit 16, for being charged in parallel or simultaneously by the charging station 30 electrically connected to the electrical energy storage system 10. Further, the first electrical energy storage unit 12 and the second electrical energy storage unit 14 are electrically connected with each other and configured, in particular by means of the charging control unit 16, such that the second electrical energy storage unit 14 may transfer electrical energy stored therein to the first electrical energy storage unit 12, thereby being discharged.

Figure 2 shows a schematic representation of a method 100. The method 100 is configured for charging the electrical energy storage system 10 and may be carried out by the charging control unit 16, for example.

In a first step 102 of the method 100, the first electrical energy storage unit 12 and the second electrical energy storage unit 14 are supplied with electrical energy from the charging station 30 and thereby charged. The charging of both electrical energy storage units 12, 14 may be carried out in parallel and as a fast charging process.

In a second step 104 of the method 100, after charging both electrical energy storage units 12, 14, electrical energy stored in the second electrical energy storage unit 14 during the first step 102 is transferred to the first electrical energy storage unit 12, thereby further charging the first electrical energy storage unit 12 and discharging the second electrical energy storage unit 14. This transferring of electrical energy or further charging of the first electrical energy storage unit 12 may be carried out slower than the fast charging process of the first step 102.

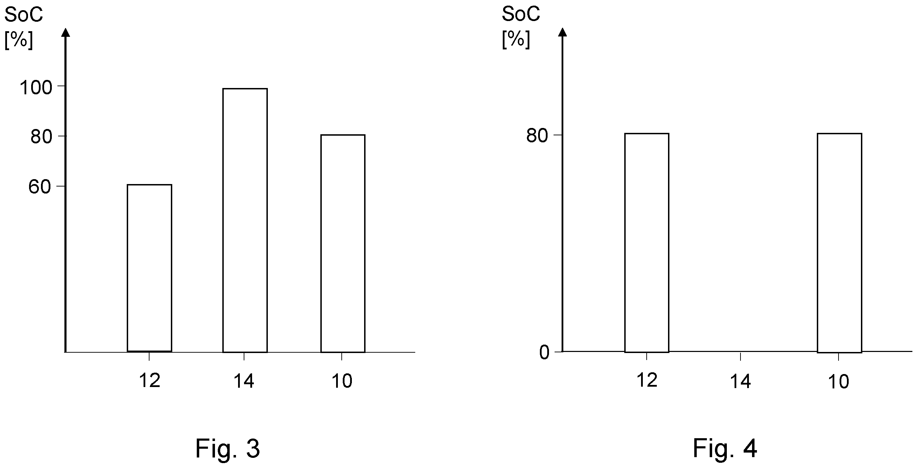

Figure 3 shows the state of charge (SOC) of each one of the electrical energy storage units 12, 14 as well as the electrical energy storage system 10 in its entirety, taking both electrical energy storage units 12, 14 together, after the first step 102 has been carried out.

As shown in Fig. 3, the electrical energy storage units 12, 14 and the electrical energy storage system 10 are charged in the first step 102 to respectively predetermined states of charge, which are chosen herein merely as an example. In this example, the first electrical energy storage unit 12 is charged up to 60 % SOC and the second electrical energy storage unit 14 is charged up to 100 % SOC during the fast charging process of the first step 102.

The maximum electrical energy storage capacity of the second electrical energy storage unit 14 is smaller than the one of the first electrical energy storage unit 12. In this example, the maximum electrical energy storage capacity of the second electrical energy storage unit 14 is 0.2 of the maximum electrical energy storage capacity of the first electrical energy storage unit 12. Accordingly, the SOC of the entire electrical energy storage system 10 is at 80 % in Fig. 3.

Figure 4 shows the state of charge of each one of the electrical energy storage units 12, 14 as well as the electrical energy storage system 10 in its entirety, taking both electrical energy storage units 12, 14 together, after the second step 104 has been carried out.

Accordingly, the second electrical energy storage unit 14 has been fully discharged so that its SOC is at 0 %, while the first electrical energy storage unit 12 has been further charged by transferring of the electrical energy stored in the second electrical energy storage unit 14 to the first electrical energy storage unit 12. In this example, the first electrical energy storage unit 12 is thereby charged from 60 % to 80 % SOC in the second step 104. The SOC of the entire electrical energy storage system 10 remains at 80 % as is the case in Fig. 3.

Fig. 4 assumes that the first electrical energy storage unit 12 is not discharged during driving and/or other uses of the vehicle 1. However, after the fast charging process of step 102 has been carried out, a charging cable of the charging station 30 may be plugged out of the vehicle 1 and the vehicle 1 may be driven, thereby discharging the first electrical energy storage unit 12. However, the first electrical energy storage unit 12, while being discharged, may according to the second step 104 be further charged, such that its discharge may at least partially be compensated for.

Further, if a user does not disconnect the vehicle 1 from the charging station 30 to further charge the electrical energy storage system 10, the first step 102 may be discontinued when the predetermined SOC of the first electrical energy storage unit 12 is reached, e.g., in this exemplary case 60 % SOC. In the alternative, the first step 102 may be continued, i.e., the first electrical energy storage unit 12 may be charged beyond 60 % SOC. However, this charging may not be performed as fast charging anymore, i.e., with a slower charging speed then before. Thereby, the degradation of the first electrical energy storage unit 12 may be kept low.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 1: vehicle
- 10: electrical energy storage system
- 12: first electrical energy storage unit
- 14: second electrical energy storage unit
- 16: charging control unit
- 20: load
- 30: charging station
- 100: method
- 102: first step
- 104: second step

## Claims

1. A method (100) for charging an electrical energy storage system (10), the electrical energy storage system (10) comprising a first electrical energy storage unit (12) and a second electrical energy storage unit (14), the method (100) comprising:
charging the first electrical energy storage unit (12) and the second electrical energy storage unit (14) with electrical energy; and
transferring electrical energy from the second electrical energy storage unit (14) to the first electrical energy storage unit (12), thereby discharging the second electrical energy storage unit (14).

2. The method (100) according to claim 1, wherein the charging of the first electrical energy storage unit (12) and the second electrical energy storage unit (14) with electrical energy is being carried out at least partially in parallel.

3. The method (100) according to claim 1 or 2, wherein the transferring of the electrical energy from the second electrical energy storage unit (14) to the first electrical energy storage unit is carried out after the first electrical energy storage (12) has been charged to a predetermined state of charge.

4. The method (100) according to claim 3, wherein the predetermined state of charge of the first electrical energy storage (12) is at least 40 %, at least 50 % or at least 60%.

5. The method (100) according to any one of the preceding claims, wherein the first electrical energy storage unit (12) is discharged while electrical energy from the second electrical energy storage unit (14) is transferred to the first electrical energy storage unit (12).

6. The method (100) according to any one of the preceding claims, wherein the electrical energy is transferred from the second electrical energy storage unit (14) to the first electrical energy storage unit (12) slower than electrical energy is supplied to the first electrical energy storage unit (12) and the second electrical energy storage unit (14) while charging.

7. The method (100) according to any one of the preceding claims, wherein after transferring the electrical energy from the second electrical energy storage unit (14) to the first electrical energy storage unit (12), a state of charge of the first electrical energy storage unit (12) is at least 60 % or at least 80 %

8. The method (100) according to any one of the preceding claims, wherein the second electrical energy storage unit (14) is charged to a predetermined state of charge of at least 80 % or at least 90 %.

9. The method (100) according to any one of the preceding claims, wherein electrical energy is transferred from the second electrical energy storage unit (14) to the first electrical energy storage unit (12) until the second electrical energy storage unit (14) is substantially entirely discharged.

10. The method (100) according to any one of the preceding claims, wherein the charging is carried out as fast charging of the first electrical energy storage unit (12) and the second electrical energy storage unit (14), wherein the first electrical energy storage unit (12) is charged at a fast charging rate in the range of 1C to 5C and the second electrical energy storage unit (14) is charged at a fast charging rate of at least 3C.

11. An electrical energy storage system (10), comprising a first electrical energy storage unit (12) and a second electrical energy storage unit (14), wherein the electrical energy storage system (10) is configured for being charged using a method (100) according to any one of the preceding claims.

12. The electrical energy storage system (10) according to claim 12, wherein the first electrical energy storage unit (12) comprises at least one battery cell and the second electrical energy storage unit (14) comprises at least one capacitor.

13. The electrical energy storage system (10) according to claim 13, wherein the at least one capacitor is a lithium ion capacitor.

14. A vehicle (1), comprising an electrical energy storage system (10) according to any one of claims 11 to 13.

15. A computer program product comprising instructions to cause the electrical energy storage system (10) of claims 10 to 13 or the vehicle (1) of claim 14 to carry out the method of any one of claims 1 to 10.
